# EUROPEAN PATENT APPLICATION

(11) **EP 0 924 126 A2**
(43) Date of publication of application: **23.06.1999**
(21) Application number: 98121971.0
(22) Date of filing: 19.11.1998
(51) Int. Cl.: B60T 13/74

(54) **Electric brake apparatus for prohibiting actuation of parking brake when a vehicle is moving**

(30) Priority: 22.12.1997 JP 35356997
(71) Applicant: TOYOTA JIDOSHA KABUSHIKI KAISHA, Aichi-ken 471-8571 (JP)
(72) Inventor: Yasunori, Yoshino, Toyota-shi, Aichi-ken, 471-8571 (JP); Kenji, Shirai, Toyota-shi, Aichi-ken, 471-8571 (JP); Akihiro, Otomo, Toyota-shi, Aichi-ken, 471-8571 (JP)
(74) Representative: Leson, Thomas Johannes Alois, Dipl.-Ing.

(57) **Abstract**

An electric brake apparatus does not generate an undesired parking brake force when a vehicle provided with the electric brake apparatus is moving. The parking brake force is generated by an electrically-driven brake actuator (32, 34, 40-46) by operating a parking brake switch (22). The brake actuator is prohibited from generating the parking brake force caused by an output of the parking brake switch when the vehicle is moving or an acceleration pedal of the vehicle is pressed.

## Description

### BACKGROUND OF THE INVENTION

### 1. Field of the Invention

The present invention generally relates to an electric brake apparatus and, more particularly, to an electric brake apparatus for a vehicle that electrically generates a brake force in response to an operation of a parking brake.

### 2. Description of the Related Art

Conventionally, for example, as disclosed in Japanese Laid-Open Utility Model Application No. 5-22234, an electric brake apparatus is known. The above-mentioned conventional apparatus includes a disc brake. The disc brake comprises an electrically-driven caliper including a brake motor and a disc rotor rotating with a wheel. The brake motor generates a force to hold the disc rotor by externally provided electric power. Thus, according to the above-mentioned conventional apparatus, a brake force can be generated electrically by appropriately controlling the brake motor.

The above-mentioned conventional apparatus has a parking brake switch. The parking brake switch is operated by a driver when a parking brake is required. In the above-mentioned conventional apparatus, when the parking brake switch is turned on, the brake motor is driven until the electrically-driven caliper generates a predetermined holding power. Thus, according to the above-mentioned conventional apparatus, an appropriate brake force can be generated in response to an operation of the parking brake switch.

However, in the above-mentioned conventional apparatus, the brake motor generates the predetermined holding power even when the vehicle is moving. Accordingly, in the vehicle provided with the above-mentioned conventional apparatus, an undesired brake force may be generated when the parking brake switch is mistakenly operated while the vehicle is moving.

### SUMMARY OF THE INVENTION

It is a general object of the present invention to provide an improved and useful electric brake apparatus in which the above-mentioned problems are eliminated.

A more specific object of the present invention is to provide an electric brake apparatus which does not generate an undesired brake force when a vehicle provided with the electric brake apparatus is moving.

In order to achieve the above-mentioned objects, there is provided according to the present invention an electric brake apparatus for a vehicle, comprising:
a parking brake switch;
an electrically-driven brake actuator generating a brake force in response to an output of the parking brake switch; and
parking brake restricting means for prohibiting the brake actuator from generating the brake force caused by the output of the parking brake switch when the vehicle is in a predetermined moving condition.

In the present invention, when the vehicle is not in the predetermined condition such as the vehicle is stopped, the brake actuator generates a predetermined brake force in response to an operation performed on the parking brake switch. On the other hand, when the vehicle is in the predetermined moving condition, the brake actuator does not generate a brake force if the parking brake switch is operated. Accordingly, the electric brake apparatus according to the present invention does not generate an undesired brake force if the parking brake switch is operated by mistake when the vehicle is in the predetermined moving condition.

In one embodiment of the present invention, the vehicle may be determined to be in the predetermined moving condition when a vehicle speed is equal to or greater than a predetermined value. Additionally, the vehicle may be determined to be in the predetermined moving condition when an acceleration pedal is pressed.

Additionally, the electric brake apparatus according to the present invention may further comprise a mode changing switch for changing an operational state of said brake actuator between an operation permitting mode and an operation prohibiting mode, and said vehicle is determined to be in the predetermined moving condition when the brake actuator is set to the operation prohibiting mode.

Other objects, features and advantages of the present invention will become more apparent from the following detailed description when read in conjunction with the accompanying drawings.

### BRIEF DESCRIPTION OF THE DRAWINGS

FIG.1 is a system structure diagram of an electric brake apparatus according to an embodiment of the present invention;
FIG. 2 is a flowchart of a control routine for determining whether to generate a PKB (parking brake) brake force by the electric brake apparatus shown in FIG.1; and
FIG.3 is a flowchart of a control routine performed in the electric brake apparatus shown in FIG.1 so as to appropriately generate a PKB brake force.

### DETAILED DESCRIPTION OF THE PREFERRED EMBODIMENT

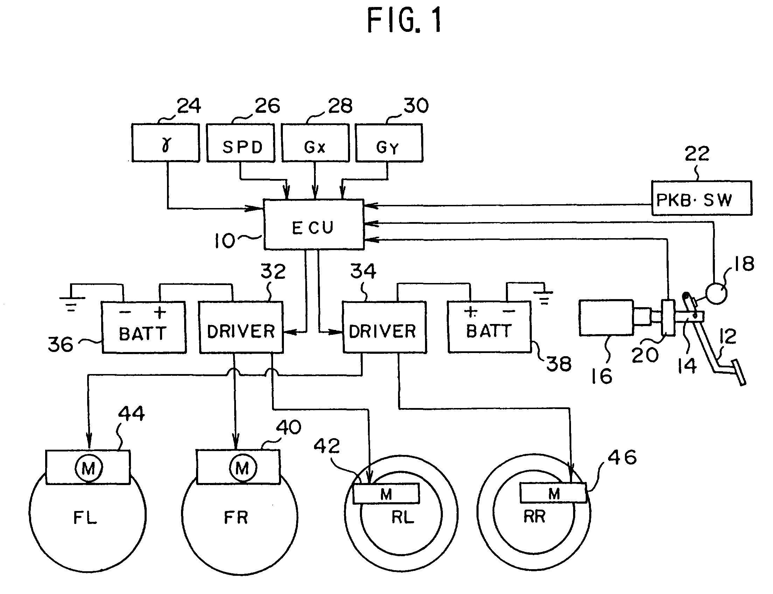

FIG.1 shows a system structure diagram of an electric brake apparatus according to a first embodiment of the present invention. The electric brake apparatus according to the present embodiment has an electronic control unit 10 (hereinafter referred to as ECU 10). The electric brake apparatus according to the present embodiment generates a brake force corresponding to a degree of operation of a brake pedal by being controlled by the ECU 10. The electric brake apparatus also generates a brake force (hereinafter referred to as PKB brake force) which is required for a parking brake (hereinafter referred to as PKB) by being controlled by the ECU 10.

The electric brake apparatus according to the present embodiment comprises a brake pedal 12. The brake pedal 12 is connected to a stroke simulator 16 via an operational shaft 14. When the brake pedal 12 is pressed by a driver, the operational shaft 14 enters the stroke simulator 16. The stroke simulator 16 generates a reaction force corresponding to a displacement of the operational shaft 14. Accordingly, a reaction force corresponding to a pedal stroke S is exerted on the brake pedal 12.

A pedal switch 18 is provided near the brake pedal 12. The pedal switch 18 is turned off when the brake pedal 12 is not pressed, and outputs an ON signal when the brake pedal 12 is pressed. The output signal of the pedal switch 18 is provided to the ECU 10. The ECU 10 determines whether or not a braking operation is performed based on the output signal of the pedal switch 18.

A stroke sensor 20 is provided to the operational shaft 14. The stroke sensor 20 outputs an electric signal corresponding to the pedal stroke S. The output signal of the stroke sensor 20 is provided to the ECU 10. The ECU 10 detects the pedal stroke S based on the output signal of the stroke sensor 20.

The electric brake apparatus according to the present embodiment is provided with a PKB switch 22. The PKB switch 22 outputs an ON signal when an operation (hereinafter, referred to as PKB operation) of a driver requiring the PKB brake force is performed. The output signal of the PKB switch 22 is provided to the ECU 10. The ECU 10 determines whether or not the PKB brake force is required based on the output signal of the PKB switch 22.

A yaw rate sensor 24, a vehicle speed sensor 26, a longitudinal acceleration sensor 28 and a transverse acceleration sensor 30 are connected to the ECU 10. The yaw rate sensor 24 outputs an electric signal corresponding to a yaw rate γ of the vehicle. The vehicle speed sensor 26 outputs a pulse signal at a frequency corresponding to a vehicle speed SPD. The longitudinal acceleration sensor 28 generates an electric signal corresponding to an acceleration with respect to a longitudinal direction of the vehicle, and the transverse acceleration sensor 30 generates an electric signal corresponding to an acceleration with respect to a direction of a width of the vehicle. The ECU 10 detects a moving condition of the vehicle based on the output signals of these sensors.

Drive circuits 32 and 34 are connected to the ECU 10. A positive terminal of a first battery 36 is connected to the drive circuit 32, and a positive terminal of a second battery 38 is connected to the drive circuit 34. Additionally, a brake motor 40 provided to a right front wheel FR and a brake motor 42 provided to a left rear wheel RL are connected to the drive circuit 32. On the other hand, a brake motor 44 provided to a left front wheel FL and a brake motor 44 provided to a right rear wheel RR are connected to the drive circuit 34.

The drive circuits 32 and 34 are circuits for driving the brake motors 40 to 46 by using the first battery 36 and the second battery 38 as a power source. The drive circuits 32 and 34 can control the brake motors 40 to 46 on an individual basis in response to an instruction signal provided by the ECU 10.

The left and right front wheels FL and FR are provided with disc brakes using the brake motors 40 and 44 as a power source, respectively. Additionally, the left and right rear wheels RL and RR are provided with drum brakes using the brake motors 42 and 46 as a power source, respectively. Each of the disc brakes and the drum brakes generates a brake force corresponding to an operational state of the respective brake motors 40 to 46.

In the present embodiment, the ECU 10 determines a brake force required by a driver based on the pedal stroke S when the brake pedal 12 is pressed. Then, the ECU 10 controls each of the brake motors 40 to 46 so that a brake force equal to the determined brake force is generated in the vehicle and so that a ratio of a brake force of the front wheels to a brake force of the rear wheels becomes a predetermined ratio. Thus, according to the electric brake apparatus of the present embodiment, an appropriate brake force corresponding to a braking operation of the driver can be generated in each of the front wheels and the rear wheels.

In the present embodiment, the ECU 10 performs brake force controls such as a known antilock brake control (hereinafter referred to as ABS control) or a known vehicle attitude control (hereinafter referred to as VSC control). The brake force controls can be achieved by calculating a target brake force to be generated by each wheel in response to a moving condition of the vehicle and controlling the brake motors 40 to 46 so that the brake force generated by each wheel is equal to the target brake force.

Additionally, in the present embodiment, the ECU 10 controls the brake motors 40 to 46 to generate a predetermined PKB brake force when a PKB operation is performed by the driver, that is, when the PKB switch 22 outputs the ON signal. Then, the ECU 10 performs a process for returning the brake motors 40 to 46 to their original positions so as to release the PKB brake force when the output signal of the PKB switch 22 changes from the ON signal to the OFF signal.

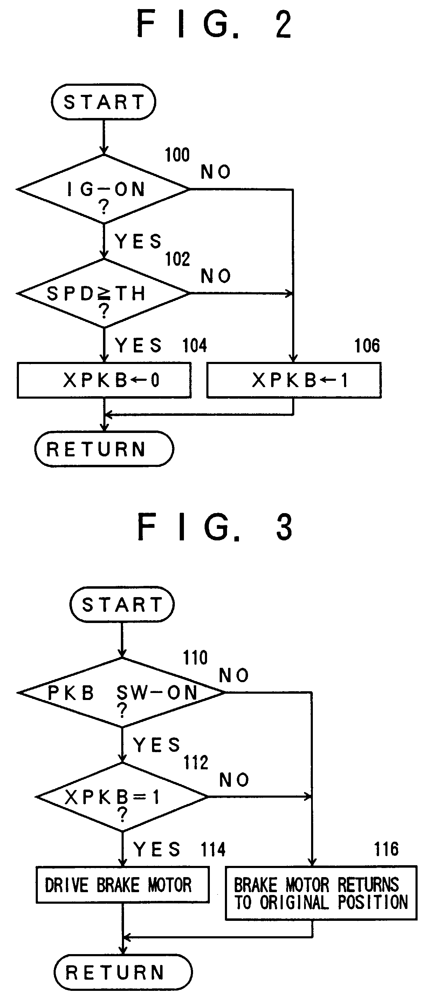

The PKB brake force is a brake force which is generated so as to maintain the vehicle in a stopped state. Accordingly, when the PKB operation is performed by mistake while the vehicle is moving, it is appropriate that the PKB brake force is not generated. In order to satisfy the above-mentioned requirement, the electric brake apparatus according to the present embodiment has a feature in that the PKB brake force is not generated even if the PKB switch outputs the ON signal when it is recognized that the vehicle is moving. A description will be given below, with reference to FIG.2 and FIG.3, of the above-mentioned feature.

FIG.2 is a flowchart of a control routine performed by the ECU 10 for determining whether to generate a PKB brake force. The routine shown in FIG. 2 is a periodic interruption routine repeatedly started every predetermined time. When the routine shown in FIG.2 is started, the process of step 100 is performed first.

In step 100, it is determined whether or not an ignition switch (hereinafter referred to as IG switch) of the vehicle is in an ON state. As a result, if it is determined that the IG switch is in the ON state, the process of step 102 is then performed.

In step 102, it is determined whether or not the vehicle speed SPD is equal to or greater than a predetermined value TH. The predetermined value TH is a threshold value for distinguishing between a state in which generation of the PKB brake force should be permitted and a state in which generation of the PKB brake force should be prohibited. In the present embodiment, the predetermined value TH is set to 10 km/h. As a result of the above-mentioned determination, if it is determined that SPD≧TH is established, it can be determined that the state in which generation of the PKB brake force should be prohibited is established. In this case, the process of step 104 is performed subsequently. On the other hand, if it is determined that SPD≧TH is not established, it can be determined that the state in which generation of the PKB brake force should be permitted is established. In this case, the process of step 106 is performed subsequently.

In step 104, a process for resetting a PKB permission flag XPKB to "0" is performed. As mentioned below, the ECU 10 determines whether to generate the PKB brake force in accordance with a state of the flag XPKB. After the process of step 104 is performed, the ECU 10 prohibits generation of the PKB brake force. After the process of step 104 is completed, the routine at this time is ended.

In step 106, a process for setting the PKB permission flag XPKB to "1" is performed. After the process of step 106 is performed, the ECU 10 permits generation of the PKB brake force. After the process of step 106 is completed, the routine at this time is ended.

In the present routine, if it is determined, in step 100, that the IG switch is not in the ON state, it can be determined that the vehicle is in a stopped state. When the vehicle is stopped, it is appropriate to always permit generation of the PKB brake force. Accordingly, if it is determined, in step 100, that the IG switch is not in the ON state, the flag XPKB is set to "1" in step 106, and, thereafter, the routine at this time is ended.

FIG. 3 shows a flowchart of a control routine performed by the ECU 10 so as to appropriately generate the PKB brake force. The routine shown in FIG.3 is a periodic interruption routine repeatedly started every predetermined time. When the routine shown in FIG.3 is started, the process of step 110 is performed first.

In step 110, it is determined whether or not the PKB switch 22 is in the ON state. If it is determined that the PKB switch 22 is in the ON state, it can be determined that the PKB brake force is required. In this case, the process of step 112 is performed subsequently.

In step 112, it is determined whether or not the PKB permission flag XPKB is set to "1". As a result, if it is determined that XPKB=1 is established, it can be determined that generation of the PKB brake force is permitted, that is, the state in which the generation of the PKB brake force should be performed is established. In this case, the process of step 114 is performed subsequently. On the other hand, if it is determined that XPKB=1 is not established, the process of step 116 is performed subsequently.

In step 114, a process for driving the brake motors 40 to 46 is performed so that the predetermined PKB brake force is generated. After the process of step 114 is performed, a state in which a brake mechanism for each wheel generates an appropriate PKB brake force is maintained. After the process of step 114 is completed, the routine at this time is ended.

In step 116, a process for returning the brake motors 40 to 46 to their original positions is performed. After the process of step 116 is performed, the PKB brake force is released.

In the present routine, if it is determined, in step 110, that the PKB switch 22 is not in the ON state, it can be determined that the PKB brake force is not required by the driver. If such a determination is made in step 110, the process of step 116 is performed, and, thereafter, the routine at this time is ended.

As mentioned above, according to the electric brake apparatus of the present invention, the predetermined PKB brake force can be generated in response to the PKB operation when the vehicle is moving at a speed less than a predetermined speed, and the generation of the PKB brake force can be prohibited irrespective of execution of the PKB operation when the vehicle is moving at a speed exceeding the predetermined value TH. Thus, according to the electric brake apparatus of the present embodiment, when the PKB operation is mistakenly performed in a condition in which the vehicle is moving at a speed exceeding the predetermined value TH, generation of an unnecessary brake force can be positively prevented.

It should be noted that, in the above-mentioned embodiment, the condition in which the vehicle speed exceeds the predetermined value TH corresponds to a predetermined moving condition. The brake mechanism including the drive circuits 32 and 34 and the brake motors 40 to 46 constitute a brake actuator. Additionally, a parking brake restricting means is achieved by the ECU 10 performing the process of the above-mentioned steps 102, 104, 112 and 114.

In the above-mentioned embodiment, although the operation of PKB is always prohibited when the vehicle is moving, the operation of PKB may neverthless be permitted when it is recognized that the driver is positively requiring the PKB even when the vehicle is moving. The above-mentioned function can be achieved, for example, by determining whether or not an acceleration pedal is pressed with a displacement exceeding a predetermined threshold value when it is determined, in step 102, that SPD≧Th is established, and performing the process of step 104 when the condition is established or performing the process of step 106 when the condition is not established.

According to the above-mentioned process, when the PKB operation is performed by releasing a depression of the acceleration pedal while the vehicle is moving, the operation of the PKB can be permitted. Additionally, a factor for determining whether the PKB should be operated while the vehicle is moving is not limited to a depression of the acceleration pedal and, for example, the operational mode can be changed between an operation permitting mode and an operation prohibiting mode by an operation of a mode changing switch.

The present invention is not limited to the specifically disclosed embodiments, and variations and modifications may be made without departing from the scope of the present invention.

The present application is based on Japanese priority application No.9-353569 filed on December 22, 1997, the entire contents of which are hereby incorporated by reference.

An electric brake apparatus does not generate an undesired parking brake force when a vehicle provided with the electric brake apparatus is moving. The parking brake force is generated by an electrically-driven brake actuator (32, 34, 40-46) by operating a parking brake switch (22). The brake actuator is prohibited from generating the parking brake force caused by an output of the parking brake switch when the vehicle is moving or an acceleration pedal of the vehicle is pressed.

## Claims

1. An electric brake apparatus for a vehicle, comprising:
a parking brake switch (22); and
an electrically-driven brake actuator (32, 34, 40-46) generating a brake force in response to an output of said parking brake switch,
characterized in that:
said brake actuator is prohibited from generating the brake force caused by the output of said parking brake switch (22) when said vehicle is in a predetermined moving condition.

2. The electric brake apparatus as claimed in claim 1, characterized in that said vehicle is determined to be in said predetermined moving condition when a vehicle speed is equal to or greater than a predetermined value.

3. The electric brake apparatus as claimed in claim 1, characterized in that said vehicle is determined to be in said predetermined moving condition when an acceleration pedal is pressed.

4. The electric brake apparatus as claimed in claim 1, characterized in that a mode changing switch is provided for changing an operational state of said brake actuator between an operation permitting mode and an operation prohibiting mode, said vehicle is determined to be in said predetermined moving condition when said brake actuator is set to said operation prohibiting mode.
